# EUROPÄISCHE PATENTSCHRIFT

(11) **EP 4 286 790 B1**
(45) Veröffentlichungstag und Bekanntmachung des Hinweises auf die Patenterteilung: **03.07.2024**
(21) Anmeldenummer: 22176418.6
(22) Anmeldetag: 31.05.2022
(51) Int. Cl.: G01B 11/00, B66C 19/00, G01S 17/89, B66C 13/46, G01S 7/48, G01S 17/10, G01S 17/42, G01S 17/86, G01S 17/88, G01B 11/24

(54) **VORRICHTUNG UND VERFAHREN ZUM ERMITTELN DER RÄUMLICHEN LAGE VON AUFNAHMEELEMENTEN EINES CONTAINERS**
DEVICE AND METHOD FOR DETERMINING THE SPATIAL POSITION OF RECEIVING ELEMENTS OF A CONTAINER
DISPOSITIF ET PROCÉDÉ DE DÉTERMINATION DE LA POSITION SPATIALE DES ÉLÉMENTS DE RÉCEPTION D'UN CONTENEUR

(43) Veröffentlichungstag der Anmeldung: 06.12.2023
(73) Patentinhaber: SICK AG, 79183 Waldkirch (DE)
(72) Erfinder: RUH, Dominic, 79102 Freiburg (DE); WITTMEIER, Steffen, 79183 Waldkirch (DE)
(74) Vertreter: Manitz Finsterwald Patent- und Rechtsanwaltspartnerschaft mbB

(56) Entgegenhaltungen:
- CN-A- 108 491 851
- DE-A1-102008 019 373
- US-A1- 2002 024 598
- US-A1- 2022 009 748

## Beschreibung

Die vorliegende Erfindung betrifft eine Vorrichtung und ein Verfahren zum Ermitteln der räumlichen Lage von Aufnahmeelementen eines Containers.

Bei der Automatisierung moderner Häfen spielt die Behandlung von Containern eine zentrale Rolle. Zum Bewegen eines Containers, d.h. zum Aufnehmen, Transportieren und erneuten Absetzen eines solchen, wird üblicherweise ein STS-Kran (STS vom Englischen: Ship To Shore) oder ein RTG-Kran (RTG vom Englischen: Rubber Tyred Gantry) verwendet. Der STS- oder RTG-Kran weist eine Laufkatze mit einem Containergeschirr auf, an dem sogenannte Twistlocks angebracht sind. Die Twistlocks sind dafür vorgesehen, in Aufnahmeelemente eines Containers einzugreifen und in diesen befestigt zu werden. Nachdem das Containergeschirr mittels der Twistlocks an dem Container befestigt ist, kann dieser mittels der Laufkatze des STS- oder RTG-Krans angehoben und zu einer gewünschten Position transportiert werden, an welcher der Container wieder abgesetzt wird.

Um den Container im Rahmen eines automatisierten Vorgangs aufzunehmen und anheben zu können, ist es notwendig, die Position der Aufnahmeelemente, beispielsweise sogenannter Corner Castings, genau zu ermitteln. Darüber hinaus sollte der Zustand der Aufnahmeelemente bzw. Corner Castings untersucht werden können, um beispielsweise zu ermitteln, ob diese defektfrei sind oder ob ein Twistlock in einem jeweiligen Corner Casting vorhanden und/oder korrekt angebracht ist.

Um die Position und den Zustand von Aufnahmeelementen bzw. Corner Castings eines Containers zu ermitteln, kann beispielsweise LIDAR-Technologie oder eine ähnliche optische Sensorik verwendet werden. Bei solchen Technologien reicht jedoch die räumliche Auflösung meistens nicht aus, um die Position und den Zustand von Aufnahmeelementen bzw. Corner Castings eines Containers zuverlässig zu ermitteln.

DE 10 2008 019 373 A1 offenbart eine Vorrichtung zur Ermittlung der Orientierung und der Maße eines Containers aufweisend zwei auf die Laufkatze eines Krans angeordnete Sensoren zur optischen Abtastung des Containers und eine Auswertungseinheit zur Ermittlung der Orientierung und Maße des Containers in dem Bezugssystem der optischen Sensoren aus den erfassten Sensordaten.

Eine Aufgabe der Erfindung besteht folglich darin, eine Vorrichtung und ein Verfahren zu schaffen, mit denen die räumliche Lage von Aufnahmeelementen eines Containers zuverlässig ermittelt werden kann.

Diese Aufgabe wird durch eine Vorrichtung und ein Verfahren mit den Merkmalen der unabhängigen Ansprüche gelöst.

Die Vorrichtung umfasst einen sich bewegenden Sensor und eine Auswertungseinheit. Der sich bewegende Sensor ist ausgebildet, um einen jeweiligen Satz räumlicher Koordinaten von Punkten für mehrere voneinander verschiedene Sensorpositionen zu ermitteln. Die Punkte liegen in einem Raumbereich, der einen Container umfasst. Die Auswertungseinheit ist ausgebildet, um die jeweiligen Sätze räumlicher Koordinaten zu einer fusionierten Gesamtheit von Koordinaten zusammenzusetzen. Anhand der fusionierten Gesamtheit der Koordinaten der Punkte ermittelt die Auswertungseinheit eine jeweilige räumliche Lage der Aufnahmeelemente des Containers.

Der sich bewegende Sensor kann als ein LIDAR-Sensor ausgebildet sein, mit dem ein vorbestimmter Raumbereich abgetastet werden kann, der durch das Sichtfeld des LIDAR-Sensors vorgegeben ist. Der Sensor kann also zur Entfernungsmessung ausgebildet sein, beispielsweise durch eine Messung der Lichtlaufzeit von vom Sensor ausgesandten Lichtpulsen. Durch jede Entfernungsmessung kann die räumliche Lage z.B. eines Punkts der Oberfläche des Containers als räumliche Koordinaten ermittelt werden.

Ferner kann der sich bewegende Sensor als ein zweidimensionaler Laserscanner ausgebildet sein, wobei ein von einem Laser erzeugter Lichtstrahl mit Hilfe einer Ablenkeinheit periodisch einen vorbestimmten Raumbereich abtastet. Das Licht wird an Objekten in dem Raumbereich (z.B. der Oberfläche eines Containers) remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Mit den Winkel- und Entfernungsangaben ist der Ort eines Objektes in dem Raumbereich in zweidimensionalen Polarkoordinaten erfasst. Damit lassen sich die Positionen von Objekten ermitteln oder deren Kontur bestimmen. Alternativ kann der sich bewegende Sensor als dreidimensionaler Laserscanner ausgebildet sein, wobei eine Relativbewegung in Querrichtung ebenfalls erfasst wird, beispielsweise durch einen weiteren Bewegungsfreiheitsgrad der Ablenkeinheit in dem Laserscanner. So können auch dreidimensionale Konturen ausgemessen werden.

Die Bewegung des Sensors kann dadurch erfolgen, dass dieser an einer Laufkatze eines Krans oberhalb des Containers angebracht ist. Der Sensor kann sich in diesem Fall beispielsweise mit der Laufkatze in Querrichtung des Containers und mit dem Kran in Längsrichtung des Containers bewegen. Alternativ oder zusätzlich kann der Sensor zur Bewegung an einer Einrichtung angebracht sein, die den Sensor rotiert oder kippt, beispielsweise bezogen auf die Laufkatze des Krans. Allgemein bezieht sich der Begriff "sich bewegender Sensor" somit auf eine relative Bewegung des Sensors bezogen auf den Container, die sowohl eine Rotation als auch eine Translation umfassen kann.

Die räumlichen Koordinaten der Punkte des jeweiligen Satzes sind bevorzugt bezogen auf einen festen Raumpunkt definiert, beispielsweise bezogen auf eine Anfangsposition des sich bewegenden Sensors. Ferner umfassen die räumlichen Koordinaten beispielsweise kartesische x-, y- und z-Koordinaten der jeweiligen Punkte. Die räumliche Lage der Aufnahmeelemente des Containers umfasst einerseits deren Position im Raum einschließlich ihrer Abmessungen und andererseits die räumliche Orientierung der Aufnahmeelemente, d.h. drei Raumwinkel, die in demjenigen Koordinatensystem definiert sind, auf das sich die räumlichen Koordinaten der Punkte beziehen. Koordinaten von Punkten in den jeweiligen Sätzen können ferner an Außenflächen des Containers ermittelt werden.

Das Zusammensetzen der jeweiligen Sätze räumlicher Koordinaten der Punkte zu einer fusionierten Gesamtheit von Koordinaten kann derart erfolgen, dass die jeweiligen Sätze räumlicher Koordinaten für die jeweilige Sensorposition in ein gemeinsames Welt-Koordinatensystem überführt bzw. transformiert werden. Wenn der Sensor an einer Laufkatze eines Krans angebracht ist, kann eine jeweilige Transformationsmatrix für den entsprechenden Satz der Koordinaten beispielsweise anhand der momentanen Position der Laufkatze und/oder des Krans ermittelt werden. Zusätzlich oder alternativ kann eine solche Transformationsmatrix die Position und die Orientierung einer Einrichtung berücksichtigen, die zum Rotieren und/oder Verkippen des Sensors vorgesehen sein kann.

Die Transformation der Koordinaten zum Erzeugen der fusionierten Gesamtheit kann lediglich eine Vektoraddition beispielsweise der x-, y- und z-Koordinaten eines Punktes bzw. Messpunktes und der momentanen Position der Laufkatze in dem vordefinierten Welt-Koordinatensystem umfassen. Die Transformation kann jedoch auch eine Rotation zwischen dem Sensor- und dem Weltkoordinatensystem beinhalten. Beide Fälle lassen sich durch die Links-Multiplikation der Koordinaten mit einer homogenen Transformationsmatrix (4x4 Matrix) realisieren.

Die Ermittlung der räumlichen Lage der Aufnahmeelemente kann einerseits direkt anhand der fusionierten Gesamtheit der Koordinaten der Punkte erfolgen, die mittels des sich bewegenden Sensors insgesamt detektiert werden. Beispielsweise kann bei bekannter Geometrie der Aufnahmeelemente des Containers ein Modell eines jeweiligen Aufnahmeelements an eine "Wolke" erfasster Punkte in einem vordefinierten Raumbereich angepasst werden. Der vordefinierte Raumbereich für eine solche Anpassung kann beispielsweise anhand einer bekannten Containergeometrie als ein Bereich festgelegt werden, in welchem sich das jeweilige Aufnahmeelement höchstwahrscheinlich befindet.

Alternativ kann die räumliche Lage der Aufnahmeelemente indirekt ermittelt werden, indem zunächst die räumliche Lage des Containers insgesamt ermittelt wird. Anschließend kann die räumliche Lage der jeweiligen Aufnahmeelemente anhand der ermittelten räumlichen Lage des Containers und anhand einer bekannten Containergeometrie bestimmt werden.

Die Verwendung von "Vorwissen" bezüglich des Containers, z.B. bezogen auf den vordefinierten Raumbereich des Containers oder dessen räumliche Lage, kann die Datenmenge reduzieren, die von der Auswertungseinheit zu verarbeiten ist. Dadurch kann sich der computertechnische Aufwand verringern, der zum Betreiben der Vorrichtung erforderlich ist. Ferner kann sich die Verarbeitungsgeschwindigkeit erhöhen.

Bei den Aufnahmeelementen des Containers handelt es sich beispielsweise um Befestigungs-Aufnahmen oder Corner Castings, an denen der Container zum Anheben befestigt werden kann. Die Aufnahmeelemente des Containers befinden sich jedoch nicht notwendigerweise in jeweiligen Ecken an der Oberseite des Containers.

Da mehrere Sätze räumlicher Koordinaten für die voneinander verschiedenen Sensorpositionen miteinander fusioniert werden, wird einerseits die räumliche Auflösung im Vergleich zu einem sich nicht bewegenden Sensor erhöht, insbesondere dann, wenn sich die Raumbereiche überlagern, in denen die jeweiligen Sätze der räumlichen Koordinaten von Punkten erfasst werden. Ferner wird durch die Fusion der mehreren Sätze von räumlichen Koordinaten der Punkte der räumliche Sichtbereich im Vergleich zu einem sich nicht bewegenden Sensor erweitert. Durch die Erhöhung der Auflösung und die Erweiterung des Sichtbereichs lässt sich die räumliche Lage der Aufnahmeelemente des Containers genauer und zuverlässiger ermitteln.

Die Behandlung bzw. der Transport des Containers kann somit auf einfachere und schnellere Weise erfolgen, und es kann ein höherer Automatisierungsgrad erreicht werden, da beispielsweise der Zeitaufwand für eine optionale manuelle Kontrolle verringert ist, beispielsweise vor dem Anheben des Containers. Darüber hinaus wird auch das Unfallrisiko gesenkt, das mit einer solchen Kontrolle bzw. Inspektion, beispielsweise durch einen Hafenmitarbeiter, verbunden ist.

Vorteilhafte Weiterbildungen der Erfindung sind in den Unteransprüchen, der Beschreibung und den Zeichnungen angegeben.

Gemäß einer Ausführungsform können die mehreren voneinander verschiedenen Sensorpositionen einem jeweiligen Zeitpunkt zugeordnet sein, zu dem der sich bewegende Sensor einen jeweiligen Satz der räumlichen Koordinaten der Punkte erfasst.

Der Sensor kann bei dieser Ausführungsform an einem Kran fest angebracht sein, beispielsweise an dessen Laufkatze, der zum Bewegen des Containers vorgesehen ist. Der Sensor wird somit lediglich mit dem Kran bzw. der Laufkatze mitbewegt, und ein jeweiliger Satz räumlicher Koordinaten der Punkte, der beispielsweise einen Teilbereich an der Oberfläche des Containers abdeckt, kann beispielsweise zu vordefinierten Zeitpunkten und/oder mit gleichen Zeitintervallen zwischen diesen erfasst werden. Bei einer solchen festen Installation des Sensors, beispielsweise am Kran oder an der Laufkatze, entfallen weitere Elemente zur Bewegung des Sensors, so dass folglich auch kein Wartungsaufwand für solche Elemente erforderlich ist.

Der sich bewegende Sensor kann einen oder mehrere Sensoren und eine Einrichtung zum jeweiligen Verkippen des einen Sensors oder der mehreren Sensoren umfassen. Es kann eine mechanische Einheit zum Verkippen des Sensors vorgesehen sein, die auch als Swivel Unit bezeichnet wird. Der eine Sensor oder die mehreren Sensoren können wiederum an einer Laufkatze eines Krans angebracht sein, der zum Bewegen des Containers vorgesehen ist.

Wenn der Sensor beispielsweise als eine dreidimensionaler Scanner ausgebildet ist, der eine Oberseite des Containers vollständig erfassen kann, kann eine solche Ausführungsform der Vorrichtung nicht auf eine Bewegung eines Krans und/oder einer Laufkatze eines solchen angewiesen sein, um die räumlichen Koordinaten von Punkten an voneinander verschiedenen Sensorpositionen erfassen zu können. Vielmehr können mittels der Einrichtung zum Verkippen bereits unterschiedliche Sensorpositionen eingestellt werden. Die Einrichtung zum Verkippen ist allerdings mit zusätzlichen Kosten verbunden und erfordert zusätzlichen Wartungsaufwand im Vergleich zu einem Sensor, der an einem Kran fest installiert ist und sich lediglich mit diesem mitbewegt. Der Sensor kann ferner zusätzlich mit einer Laufkatze eines Krans, an welcher der Sensor angebracht sein kann, bewegt werden, insbesondere dann, wenn der Sensor die Oberseite des Containers nicht vollständig erfassen kann, wie etwa bei einem Linienscanner. Insgesamt ergibt sich bei einer solchen Ausführungsform eine Erhöhung der Auflösung und eine Erweiterung des Sichtbereichs der Vorrichtung.

Gemäß einer weiteren Ausführungsform kann der Sensor an einer Laufkatze eines Krans angebracht sein, der zum Bewegen des Containers vorgesehen ist. Die Auswertungseinheit kann ferner ausgebildet sein, um eine momentane Position der Laufkatze zu erfassen und eine jeweilige der voneinander verschiedenen Sensorpositionen anhand der momentanen Position der Laufkatze zu ermitteln.

Bei dieser Ausführungsform wird somit die Position der Laufkatze nachverfolgt, um die voneinander verschiedenen Sensorpositionen festzulegen, an denen die jeweiligen Sätze der räumlichen Koordinaten der Punkte erfasst werden. Ein Messsignal, das die momentane Position der Laufkatze bezogen auf den Kran angibt, kann ohnehin im Rahmen der Steuerung des Krans vorhanden und verfügbar sein oder durch eine zusätzliche Messeinheit (z.B. durch eine inertiale Messeinheit (IMU) oder durch einen Encoder) am Kran, an der Laufkatze oder am Sensor gemessen werden. In diesem Fall verringert sich der Aufwand, der zum Ermitteln der voneinander verschiedenen Sensorpositionen erforderlich ist, da diese von der Position der Laufkatze abgeleitet werden können.

Gemäß einer weiteren Ausführungsform kann die Auswertungseinheit ferner ausgebildet sein, um eine dreidimensionale Registrierung der jeweiligen Sätze räumlicher Koordinaten der Punkte für die mehreren voneinander verschiedenen Sensorpositionen mittels eines vordefinierten Algorithmus durchzuführen. Der vordefinierte Algorithmus kann ein klassischer Algorithmus sein, z.B. ein Iterative Closest Point Algorithmus (ICP-Algorithmus), oder ein modellbasierter Algorithmus, um die jeweiligen Sätze räumlicher Koordinaten der Punkte entsprechend der Bewegung des Sensors zu fusionieren bzw. zusammenzusetzen. Der modellbasierte Algorithmus kann einen Algorithmus des maschinellen Lernens verwenden, beispielsweise ein neuronales Netz.

Bei der Verwendung des vordefinierten Algorithmus kann darauf verzichtet werden, die Bewegung der Laufkatze zu erfassen, an welcher der Sensor angebracht sein kann, um die Sätze räumlicher Koordinaten anhand der Bewegung der Laufkatze zu fusionieren. Dadurch entfällt die Abhängigkeit der Vorrichtung von einer weiteren Einflussgröße bzw. von einem externen Messsignal.

Darüber hinaus kann der Algorithmus vorbestimmte Informationen bezüglich der Geometrie des Containers verwenden. Der Algorithmus ist folglich mit einem gewissen Vorwissen bezüglich des Containers und der Position der Aufnahmeelemente ausgestattet. Dadurch kann sich der Aufwand zum Ausführen des Algorithmus verringern, und die Genauigkeit der Ausgabe, d.h. die jeweilige räumliche Lage der Aufnahmeelemente des Containers, kann verbessert werden.

Durch die Fusion der räumlichen Koordinaten (d.h. von Messpunkten) wird so z.B. ein Datensatz mit einer höheren Dichte von räumlichen Koordinaten/Messpunkten geschaffen.

Die Auswertungseinheit kann ferner ausgebildet sein, um anhand der fusionierten Gesamtheit der Koordinaten der Punkte eine räumliche Position und eine räumliche Orientierung des Containers zu ermitteln und anhand der räumlichen Position und der räumlichen Orientierung des Containers die jeweilige räumliche Lage der Aufnahmeelemente des Containers zu ermitteln. Bei dieser Ausführungsform erfolgt die Ermittlung der räumlichen Lage der Aufnahmeelemente somit indirekt, indem zunächst der Container als Ganzes betrachtet und an die Punktwolke, d.h. die fusionierte Gesamtheit der Koordinaten der Punkte, bezüglich seiner räumlichen Lage angepasst wird. Da die räumliche Lage der Aufnahmeelemente innerhalb des Containers bekannt sein kann, kann somit der Aufwand zur Ermittlung der jeweiligen räumlichen Lage der Aufnahmeelemente verringert sein, da sich der Container als Ganzes auf einfachere Weise an die Punktwolke anpassen lässt.

Darüber hinaus kann eine solche Anpassung des gesamten Containers im Vergleich zu einer Anpassung jeweiliger Aufnahmeelemente mit größerer Genauigkeit erfolgen. Die Auswertungseinheit kann die fusionierte Gesamtheit der Koordinaten beispielsweise an ein einfaches Modell des Containers anpassen, z.B. mittels eines bekannten Fitting-Algorithmus. Alternativ kann wiederum ein Algorithmus des maschinellen Lernens verwendet werden, wie beispielsweise ein neuronales Netz, um die Position und die Ausrichtung des Containers zu schätzen.

Weiterhin kann die Auswertungseinheit ausgebildet sein, um anhand der fusionierten Gesamtheit der Koordinaten der Punkte einen Zustand des jeweiligen Aufnahmeelements des Containers zu ermitteln. Bei dieser Ausführungsform werden somit nicht nur die räumliche Lage, sondern darüber hinaus weitere Eigenschaften der Aufnahmeelemente ermittelt. Der Zustand des jeweiligen Aufnahmeelements kann einen defekten Zustand, einen Zustand mit Twistlock in dem jeweiligen Aufnahmeelement oder einen Zustand ohne Twistlock in dem jeweiligen Aufnahmeelement umfassen.

Wenn anhand der fusionierten Gesamtheit der Koordinaten ein defekter Zustand einer der Aufnahmeelemente ermittelt wird, kann beispielsweise die Verbindung eines Containergeschirrs bzw. der Twistlocks mit dem Container unterbunden werden, bevor versucht wird, den Container anzuheben. Dadurch kann das Unfallrisiko verringert werden, das beispielsweise mit dem Greifen eines defekten Corner Castings bzw. defekten Aufnahmeelements verbunden sein kann. Die Erfassung eines vorhandenen oder nicht vorhandenen Twistlocks in einem jeweiligen Aufnahmeelement kann darüber hinaus die Steuerung beim Anheben des Containers vereinfachen, wenn die Vorrichtung Informationen bezüglich der Zustände von Twistlocks in den jeweiligen Aufnahmeelementen für andere Steuerungen bereitstellt.

Weiterer Gegenstand der Erfindung ist ein Verfahren zum Ermitteln der räumlichen Lage von Aufnahmeelementen eines Containers. Gemäß dem Verfahren wird ein jeweiliger Satz räumlicher Koordinaten von Punkten mittels eines sich bewegenden Sensors für mehrere voneinander verschiedene Sensorpositionen und/oder mit mehreren voneinander verschiedenen Sensorausrichtungen erfasst. Die Punkte liegen in einem Raumbereich, der den Container umfasst. Anschließend werden die jeweiligen Sätze räumlicher Koordinaten zu einer fusionierten Gesamtheit von Koordinaten zusammengesetzt, und anhand der fusionierten Gesamtheit der Koordinaten wird eine jeweilige räumliche Lage der Aufnahmeelemente des Containers ermittelt.

Die vorstehend beschriebene Vorrichtung ist folglich ausgebildet, um mittels des sich bewegenden Sensors und der Auswertungseinheit die Schritte des Verfahrens auszuführen. Die vorstehenden Ausführungsformen der erfindungsgemäßen Vorrichtung gelten somit auch für das erfindungsgemäße Verfahren, insbesondere hinsichtlich der Offenbarung, der Vorteile und der bevorzugten Ausführungsformen.

Nachfolgend wird die Erfindung beispielhaft anhand einer vorteilhaften Ausführungsform unter Bezugnahme auf die beigefügten Figuren beschrieben. Es zeigen, jeweils schematisch:
- Fig. 1: einen Kran, einen Container und eine erfindungsgemäße Vorrichtung,
- Fig. 2: ein Aufnahmeelement eines Containers in der Form eines Corner Castings,
- Fig. 3: eine Darstellung für das Zusammensetzen zweier Sätze von Punkten und
- Fig. 4: eine fusionierte Gesamtheit von Punkten, die an der Oberseite von Containern erfasst wurden.

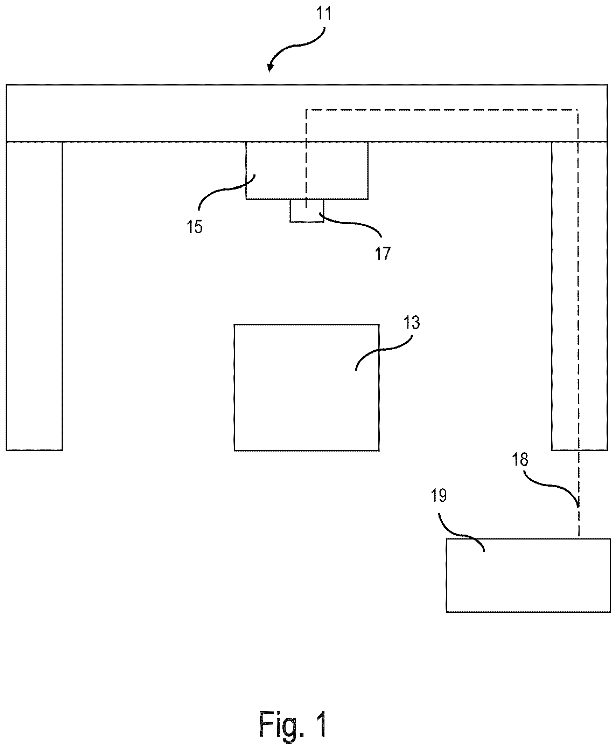

Fig. 1 zeigt eine schematische Darstellung eines Krans 11, der zum Bewegen eines Containers 13 vorgesehen ist. Der Kran 11 umfasst zu diesem Zweck eine Laufkatze 15, an der zum Anheben, Bewegen und Absetzen des Containers 13 ein nicht dargestelltes Containergeschirr mit sogenannten Twistlocks angebracht ist. Der Kran 11 ist beispielsweise ein STS-Kran (STS vom Englischen: Ship To Shore) oder ein RTG-Kran (RTG vom Englischen: Rubber Tyred Gantry), wie sie typischerweise in modernen Hafenanlagen verwendet werden.

An der Laufkatze 15 ist ein Sensor 17 befestigt, der als LIDAR-Sensor ausgebildet ist. Der Sensor 17 weist daher einen Laserscanner auf, der einen gewissen Raumbereich an der Oberseite des Containers 13 erfasst. Mittels einer Detektionseinheit ist der Sensor 17 ferner ausgebildet, um einen Satz räumlicher Koordinaten von Punkten aus dem Sichtbereich des Sensors 17 zu erfassen, d.h. an der Oberseite des Containers 13.

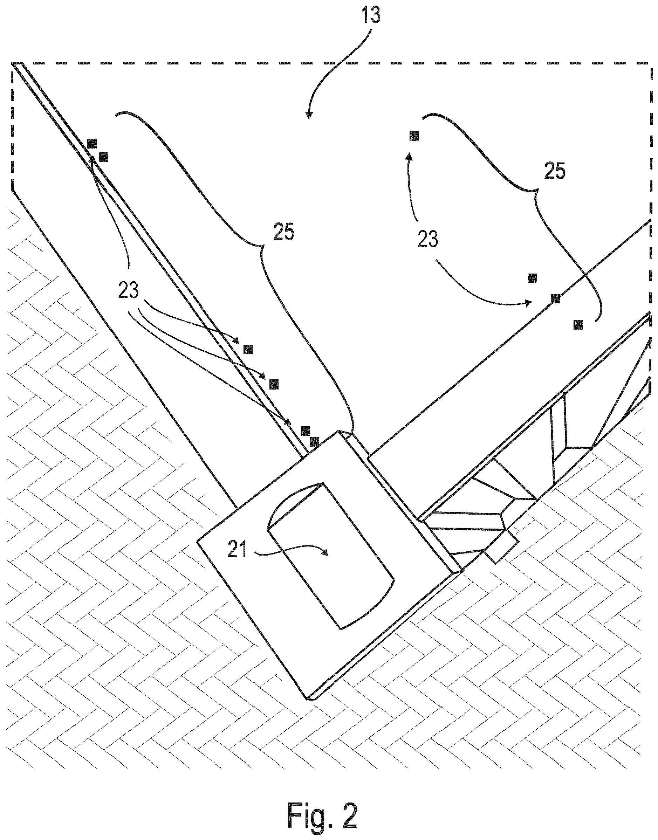

Der Sensor 17 ist ferner mittels einer elektronischen Kommunikationsverbindung 18 mit einer Auswertungseinheit 19 verbunden. Die Auswertungseinheit 19 ist dafür vorgesehen, die jeweilige räumliche Lage von Aufnahmeelementen 21 (vgl. Fig. 2) an der Oberseite des Containers 13 zu ermitteln. Die Aufnahmeelemente 21 werden auch als "Corner Castings" bezeichnet, da diese als Gussteile in jeweiligen oberen Ecken des Containers 13 angeordnet sind. Um den Container 13 anzuheben, werden die Twistlocks, die an dem nicht dargestellten Containergeschirr der Laufkatze 15 angebracht sind, jeweils mit den Aufnahmeelementen bzw. Corner Castings 21 des Containers 13 in Eingriff gebracht und befestigt.

Um eine solche Befestigung zuverlässig herzustellen, müssen bei einem automatisierten Vorgang, bei dem der Container ohne manuelle Unterstützung und Überprüfung bewegt werden soll, die Positionen der Aufnahmeelemente bzw. Corner Castings 21 sowie die Position und Orientierung des Containers insgesamt bekannt sein. Ferner ist es notwendig, dass auch der Zustand der Corner Castings 21 bekannt ist, d.h. ob diese defektfrei sind und ob momentan ein Twistlock in dem jeweiligen Corner Casting 21 angeordnet ist oder nicht.

In Fig. 2 sind außer dem Aufnahmeelement bzw. Corner Casting 21 Punkte 23 dargestellt, die mittels eines bekannten Sensors entlang Laserlinien 25 an der Oberseite eines Containers 13 ermittelt wurden. Die Punkte 23 sind somit das Ergebnis eines Scans entlang der zwei Laserlinien 25 mittels des bekannten LIDAR-Sensors.

Wie in Fig. 2 zu erkennen ist, weisen die Punkte 23 eine geringe Dichte auf, was einer geringen Auflösung des bekannten LIDAR-Sensors entspricht. Es könnte zwar möglich sein, mit Hilfe der Punkte 23 anhand eines geeigneten Auswerteverfahrens die Position und die Ausrichtung des Containers 13 zu ermitteln, wenn für diesen bekannte Informationen seiner Geometrie bereitgestellt werden. Eine zuverlässige Ermittlung der räumlichen Lage der Corner Castings 21 ist jedoch anhand der Punkte 23 kaum möglich.

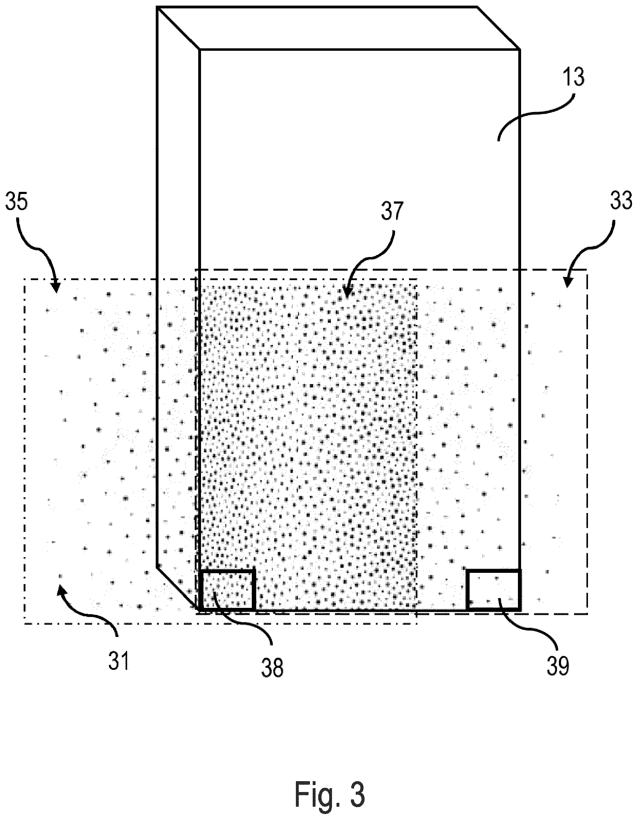

Um dieses Problem aufgrund der geringen räumlichen Auflösung bekannter LIDAR-Sensoren zu lösen, ist gemäß der erfindungsgemäßen Vorrichtung und dem erfindungsgemäßen Verfahren vorgesehen, dass an mehreren voneinander verschiedenen Sensorpositionen ein jeweiliger Satz 33, 35 räumlicher Koordinaten von Punkten 31 erfasst wird (vgl. Fig. 3), indem der Sensor 17 (vgl. Fig. 1) zusammen mit der Laufkatze 15 bewegt wird. Mit anderen Worten werden während der Bewegung der Laufkatze 15 an voneinander verschiedenen Positionen des Sensors 17 jeweilige Scans an der Oberseite des Containers 13 durchgeführt, um an jeder dieser Positionen des Sensors 17 einen jeweiligen Satz 33, 35 räumlicher Koordinaten von Punkten 31 an der Oberseite des Containers 13 zu ermitteln.

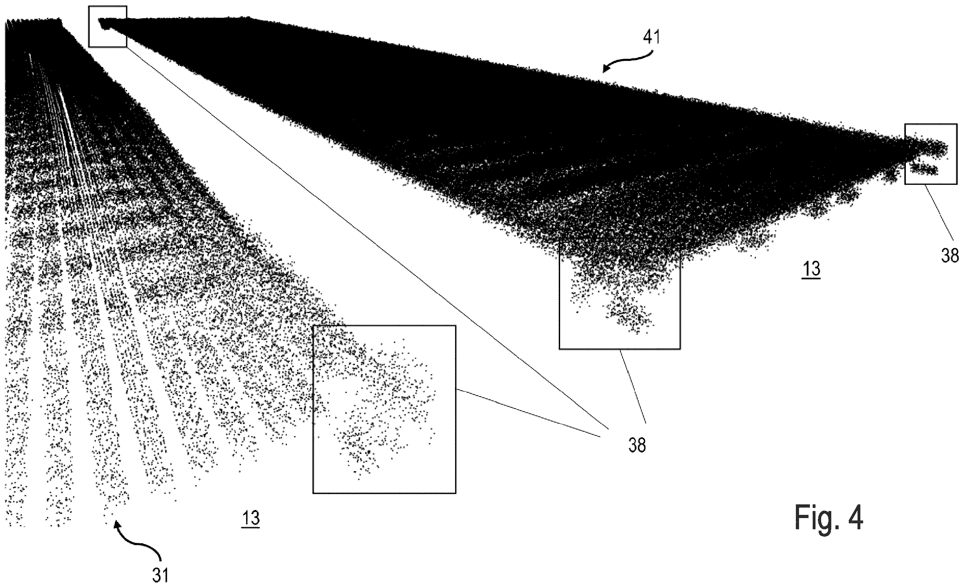

Die jeweiligen Sätze 33, 35 räumlicher Koordinaten der Punkte 31 werden somit mittels des Sensors 17 zu verschiedenen Zeitpunkten und ausgehend von verschiedenen räumlichen Positionen erfasst und an die Auswertungseinheit 19 übertragen. Die Auswertungseinheit 19 setzt die jeweiligen Sätze 33, 35 der räumlichen Koordinaten bzw. Punkte 31, die für die Oberfläche des Containers 13 ermittelt werden, zu einer fusionierten Gesamtheit 41 (vgl. Fig. 4) von Koordinaten bzw. Punkten 31 zusammen.

Ein Beispiel eines solchen Zusammensetzens zweier Sätze 33, 35 von Punkten 31 ist schematisch in Fig. 3 dargestellt. Im Bereich der Oberseite des Containers 13 wird mittels des Sensors 17 (vgl. Fig. 1) eine erste Punktwolke bzw. der erste Satz 33 von Punkten 31 und eine zweite Punktwolke bzw. der zweite Satz 35 von Punkten 31 erfasst, die einen Überlagerungsbereich 37 aufweisen. Zur besseren Veranschaulichung sind die beiden Punktwolken 33, 35 mit einer gestrichelten Linie bzw. einer strichpunktierten Linie umgeben, die leicht gegeneinander versetzt sind.

Man erkennt, dass durch die Fusion der beiden Punktwolken 33, 35 die Dichte der Punkte 31 und damit die Auflösung des Sensors 17 im Überlagerungsbereich 37 deutlich erhöht ist. Dies gilt insbesondere für den Bereich 38 des linken unteren Corner Castings des Containers 13, der innerhalb des Überlagerungsbereichs 37 liegt und eine größere Dichte von Punkten 31 aufweist als der Bereich 39 des rechten Corner Castings, der außerhalb des Überlagerungsbereichs 37 liegt. Durch die Fusion der Punktwolken 33, 35 ist es folglich möglich, die räumliche Lage des Corner Castings im Bereich 38 mit größerer Zuverlässigkeit zu ermitteln.

Fig. 4 zeigt eine fusionierte Gesamtheit 41 von Punkten 31, die an der Oberseite zweier benachbarter Container 13 ermittelt wurden. Die Umrisse der Container 13 wurden der Übersichtlichkeit halber in Fig. 4 weggelassen. Dennoch sind die Abmessungen der Oberseite des rechten Containers 13 anhand der fusionierten Gesamteinheit 41 der Punkte erkennbar.

Die fusionierte Gesamtheit 41 ist durch Zusammensetzen einer Vielzahl jeweiliger Sätze räumlicher Koordinaten von Punkten 31 gebildet, die an einer entsprechenden Vielzahl voneinander verschiedener Sensorpositionen erfasst wurden. Zum Erfassen der Vielzahl jeweiliger Sätze von Punkten 31 wurde der Sensor 17 (vgl. Fig. 1) zusammen mit der Laufkatze 15 entlang der Oberseite des Containers 13 bewegt. Somit erfolgte eine Bewegung des Sensors 17 relativ zu dem Container 13, indem der Kran 11 als Ganzes in einer Längsrichtung bezüglich des Containers und die Laufkatze 15 in einer Querrichtung bezüglich des Containers bewegt wurde.

Um die Vielzahl von Sätzen räumlicher Koordinaten bzw. Punkten 31 zusammenzusetzen, wurden für jeden Satz die jeweiligen Positionen der Laufkatze 15 während deren Bewegung erfasst. Anhand der Verschiebung der Laufkatze 15 ermittelte die Auswertungseinheit 19 die räumliche Lage der jeweiligen Sätze von Koordinaten, die an den jeweiligen Sensorpositionen ermittelt wurden, um die Sätze der Koordinaten anschließend zusammenzusetzen und die fusionierte Gesamtheit 41 der Punkte zu bilden, die in Fig. 4 gezeigt ist.

In Fig. 4 sind ferner wiederum räumliche Bereiche 38 dargestellt, in denen sich die Corner Castings 21 (vgl. Fig. 2) befinden. Wie in Fig. 4 zu erkennen ist, reicht die Dichte der Punkte innerhalb der räumlichen Bereiche 38 aus, um die räumliche Lage der Corner Castings bzw. Aufnahmeelemente 21 des Containers 13 zu ermitteln. Eine solche Ermittlung erfolgt mittels eines geeigneten Algorithmus direkt anhand der Punkte innerhalb der räumlichen Bereiche 38, indem entweder ein geometrisches Modell der Corner Castings 21 an die Punkte angepasst wird oder indem die Sätze räumlicher Koordinaten der Punkte 31 in dem räumlichen Bereich 38 ausgewertet werden, beispielsweise bezüglich einer Statistik der z-Werte der Punkte, d.h. senkrecht zur Oberseite des Containers 13. Alternativ oder zusätzlich ist es auch möglich, die räumliche Lage des Containers 13 insgesamt anhand der fusionierten Gesamtheit 41 von Punkten zu ermitteln, beispielsweise ebenfalls durch Anpassung eines geometrischen Modells für den Container 13. Anschließend kann die räumliche Lage der Corner Castings innerhalb der räumlichen Bereiche 38 basierend auf der ermittelten räumlichen Lage des gesamten Containers 31 bestimmt werden, indem beispielsweise wiederum eine bekannte Containergeometrie sozusagen als "a-priori-Wissen" verwendet wird.

Insgesamt gestatten die Vorrichtung und das Verfahren eine genaue Ermittlung der räumlichen Lage der Aufnahmeelemente bzw. Corner Castings 21 des Containers 13, indem mehrere Sätze 33, 35 von Punkten 31 an voneinander verschiedenen Positionen des Sensors 17 erfasst und zu der fusionierten Gesamtheit 41 von Punkten 31 zusammengesetzt werden. Dadurch wird die Dichte der Punkte 31 und damit die entsprechende räumliche Auflösung der Vorrichtung verbessert, so dass die räumliche Lage der Aufnahmeelemente bzw. Corner Castings 21 mit grö-βerer Zuverlässigkeit ermittelt werden kann.

Darüber hinaus kann anhand der Punkte 31 innerhalb der räumlichen Bereiche 38 (vgl. Fig. 4) der Zustand der Aufnahmeelemente 21 ermittelt werden. Dies bedeutet, dass anhand der Punkte innerhalb der räumlichen Bereiche 38 entschieden werden kann, ob das jeweilige Aufnahmeelement bzw. Corner Casting 21 defektfrei ist. Dies kann beispielsweise durch die Anpassung eines Modells der Corner Castings 21 an die Punkte 31 in den Bereichen 38 und die Berechnung der mittleren Abweichungen bzw. Abstände der Punkte 31 von dem angepassten Modell erfolgen. Ebenso kann anhand der Punkte 31 innerhalb der räumlichen Bereiche 38 festgestellt werden, ob ein Twistlock in dem jeweiligen Aufnahmeelement 21 angeordnet ist oder nicht. Dadurch lässt sich der Automatisierungsgrad bei der Behandlung von Containern mittels der erfindungsgemäßen Vorrichtung und des erfindungsgemäßen Verfahrens weiter verbessern.

### Bezugszeichenliste

- 11: Kran
- 13: Container
- 15: Laufkatze
- 17: Sensor
- 18: elektronische Kommunikationsverbindung
- 19: Auswertungseinheit
- 21: Aufnahmeelement bzw. Corner Casting
- 23: Punkte
- 25: Laserlinie
- 31: Punkte
- 33: erste Punktwolke bzw. erster Satz von Punkten
- 35: zweite Punktwolke bzw. zweiter Satz von Punkten
- 37: Überlagerungsbereich
- 38, 39: Bereich der Aufnahmeelemente bzw. Corner Castings
- 41: fusionierte Gesamtheit von Koordinaten bzw. Punkten

## Patentansprüche

1. Vorrichtung zum Ermitteln der räumlichen Lage von Aufnahmeelementen (21) eines Containers (13), umfassend:
einen sich bewegenden Sensor (17), der ausgebildet ist, um einen jeweiligen Satz (33, 35) räumlicher Koordinaten von Punkten (31) für mehrere voneinander verschiedene Sensorpositionen zu erfassen,
wobei die Punkte (31) in einem Raumbereich liegen, der den Container (13) umfasst, und
eine Auswertungseinheit (19), die ausgebildet ist, um:
die jeweiligen Sätze (33, 35) räumlicher Koordinaten zu einer fusionierten Gesamtheit (41) von Koordinaten zusammenzusetzen,
anhand der fusionierten Gesamtheit (41) der Koordinaten der Punkte (31) eine jeweilige räumliche Lage der Aufnahmeelemente (21) des Containers (13) zu ermitteln.

2. Vorrichtung nach Anspruch 1, wobei
die mehreren voneinander verschiedenen Sensorpositionen einem jeweiligen Zeitpunkt zugeordnet sind, zu dem der sich bewegende Sensor (17) einen jeweiligen Satz (33, 35) der räumlichen Koordinaten der Punkte (31) erfasst.

3. Vorrichtung nach Anspruch 1 oder 2, wobei
der sich bewegende Sensor (17) einen oder mehrere Sensoren (17) und eine Einrichtung zum jeweiligen Verkippen des einen oder der mehreren Sensoren (17) umfasst.

4. Vorrichtung nach einem der vorstehenden Ansprüche, wobei
der Sensor (17) an einer Laufkatze (15) eines Krans (11) angebracht ist, der zum Bewegen des Containers (13) vorgesehen ist, und
die Auswertungseinheit (19) ferner ausgebildet ist, um:
eine momentane Position der Laufkatze (15) zu erfassen und
eine jeweilige der voneinander verschiedenen Sensorpositionen anhand der momentanen Position der Laufkatze (15) zu ermitteln.

5. Vorrichtung nach einem der Ansprüche 1 bis 3, wobei
die Auswertungseinheit (19) ferner ausgebildet ist, um:
eine dreidimensionale Registrierung der jeweiligen Sätze (33, 35) räumlicher Koordinaten der Punkte (31) für die mehreren voneinander verschiedenen Sensorpositionen mittels eines vordefinierten Algorithmus durchzuführen.

6. Vorrichtung nach Anspruch 5, wobei
der Algorithmus vorbestimmte Informationen bezüglich der Geometrie des Containers (13) verwendet.

7. Vorrichtung nach einem der vorstehenden Ansprüche, wobei
die Auswertungseinheit (19) ferner ausgebildet ist, um:
anhand der fusionierten Gesamtheit (41) der Koordinaten der Punkte (31) eine räumliche Position und eine räumliche Orientierung des Containers (13) zu ermitteln und
anhand der räumlichen Position und der räumlichen Orientierung des Containers (13) die jeweilige räumliche Lage der Aufnahmeelemente des Containers (13) zu ermitteln.

8. Vorrichtung nach Anspruch 7, wobei
die Auswertungseinheit (19) die fusionierte Gesamtheit (41) der Koordinaten an ein Modell des Containers (13) anpasst.

9. Vorrichtung nach einem der vorstehenden Ansprüche, wobei
die Auswertungseinheit (19) ferner ausgebildet ist, um anhand der fusionierten Gesamtheit (41) der Koordinaten der Punkte (31) einen Zustand des jeweiligen Aufnahmeelements des Containers (13) zu ermitteln.

10. Verfahren zum Ermitteln der räumlichen Lage von Aufnahmeelementen (21) eines Containers (13), wobei das Verfahren umfasst, dass:
ein jeweiliger Satz (33, 35) räumlicher Koordinaten von Punkten (31) mittels eines sich bewegenden Sensors (17) für mehrere voneinander verschiedene Sensorpositionen erfasst wird,
wobei die Punkte (31) in einem Raumbereich liegen, der den Container (13) umfasst,
die jeweiligen Sätze (33, 35) räumlicher Koordinaten zu einer fusionierten Gesamtheit (41) von Koordinaten zusammengesetzt werden und
anhand der fusionierten Gesamtheit (41) der Koordinaten der Punkte (31) eine jeweilige räumliche Lage der Aufnahmeelemente (21) des Containers (13) ermittelt wird.

## Claims

1. An apparatus for determining the spatial position of pick-up elements (21) of a container (13), said apparatus comprising:
a moving sensor (17) which is configured to acquire a respective set (33, 35) of spatial coordinates of points (31) for a plurality of mutually different sensor positions,
wherein the points (31) lie in a spatial region which comprises the container (13); and
an evaluation unit (19) which is configured:
to combine the respective sets (33, 35) of spatial coordinates into a fused totality (41) of coordinates,
to determine a respective spatial position of the pick-up elements (21) of the container (13) based on the fused totality (41) of the coordinates of the points (31).

2. An apparatus according to claim 1, wherein
the plurality of mutually different sensor positions are associated with a respective point in time at which the moving sensor (17) acquires a respective set (33, 35) of the spatial coordinates of the points (31).

3. An apparatus according to claim 1 or 2, wherein
the moving sensor (17) comprises one or more sensors (17) and a device for respectively tilting the one or more sensors (17).

4. A method according to any one of the preceding claims, wherein
the sensor (17) is attached to a trolley (15) of a crane (11), said crane (11) being provided to move the container (13), and
the evaluation unit (19) is further configured:
to detect a current position of the trolley (15) and
to determine a respective one of the mutually different sensor positions based on the current position of the trolley (15).

5. An apparatus according to any one of the claims 1 to 3, wherein
the evaluation unit (19) is further configured:
to perform a three-dimensional registration of the respective sets (33, 35) of spatial coordinates of the points (31) for the plurality of mutually different sensor positions by means of a predefined algorithm.

6. An apparatus according to claim 5, wherein
the algorithm uses predetermined information with respect to the geometry of the container (13).

7. An apparatus according to any one of the preceding claims, wherein the evaluation unit (19) is further configured:
to determine a spatial position and a spatial orientation of the container (13) based on the fused totality (41) of the coordinates of the points (31), and
to determine the respective spatial position of the pick-up elements of the container (13) based on the spatial position and the spatial orientation of the container (13).

8. An apparatus according to claim 7, wherein
the evaluation unit (19) adapts the fused totality (41) of the coordinates to a model of the container (13).

9. An apparatus according to any one of the preceding claims, wherein
the evaluation unit (19) is further configured to determine a condition of the respective pick-up element of the container (13) based on the fused totality (41) of the coordinates of the points (31).

10. A method for determining the spatial position of pick-up elements (21) of a container (13), wherein the method comprises:
a respective set (33, 35) of spatial coordinates of points (31) being acquired by means of a moving sensor (17) for a plurality of mutually different sensor positions,
wherein the points (31) lie in a spatial region which comprises the container (13),
the respective sets (33, 35) of spatial coordinates being combined into a fused totality (41) of coordinates, and
a respective spatial position of the pick-up elements (21) of the container (13) being determined based on the fused totality (41) of the coordinates of the points (31).

## Revendications

1. Dispositif pour déterminer la position spatiale d'éléments de réception (21) d'un conteneur (13), comprenant :
un capteur (17) en mouvement, conçu pour détecter un jeu respectif (33, 35) de coordonnées spatiales de points (31) pour plusieurs positions de capteur différentes les unes des autres,
les points (31) étant situés dans une zone spatiale comprenant le conteneur (13), et
une unité d'évaluation (19) conçue pour :
assembler les jeux respectifs (33, 35) de coordonnées spatiales en un ensemble fusionné (41) de coordonnées,
déterminer, à l'aide de l'ensemble fusionné (41) des coordonnées des points (31), une position spatiale respective des éléments de réception (21) du conteneur (13).

2. Dispositif selon la revendication 1, dans lequel
lesdites plusieurs positions de capteur différentes les unes des autres sont associées à un instant respectif auquel le capteur (17) en mouvement détecte un jeu respectif (33, 35) de coordonnées spatiales des points (31).

3. Dispositif selon la revendication 1 ou 2, dans lequel
le capteur (17) en mouvement comprend un ou plusieurs capteurs (17) et un moyen pour incliner ledit ou lesdits capteurs (17) respectifs.

4. Dispositif selon l'une des revendications précédentes, dans lequel
le capteur (17) est monté sur un chariot roulant (15) d'une grue (11) prévue pour déplacer le conteneur (13), et
l'unité d'évaluation (19) est en outre conçue pour :
détecter une position momentanée du chariot roulant (15), et
déterminer une position respective des positions de capteur différentes les unes des autres à l'aide de la position momentanée du chariot roulant (15).

5. Dispositif selon l'une des revendications 1 à 3, dans lequel
l'unité d'évaluation (19) est en outre conçue pour :
réaliser un enregistrement tridimensionnel des jeux respectifs (33, 35) de coordonnées spatiales des points (31) pour lesdites plusieurs positions de capteur différentes les unes des autres, au moyen d'un algorithme prédéfini.

6. Dispositif selon la revendication 5, dans lequel
l'algorithme utilise des informations prédéterminées concernant la géométrie du conteneur (13).

7. Dispositif selon l'une des revendications précédentes, dans lequel
l'unité d'évaluation (19) est en outre conçue pour :
déterminer, à l'aide de l'ensemble fusionné (41) des coordonnées des points (31), une position spatiale et une orientation spatiale du conteneur (13), et
déterminer, à l'aide de la position spatiale et de l'orientation spatiale du conteneur (13), la position spatiale respective des éléments de réception du conteneur (13).

8. Dispositif selon la revendication 7, dans lequel
l'unité d'évaluation (19) adapte l'ensemble fusionné (41) des coordonnées à un modèle du conteneur (13).

9. Dispositif selon l'une des revendications précédentes, dans lequel
l'unité d'évaluation (19) est en outre conçue pour déterminer un état de l'élément de réception respectif du conteneur (13) à l'aide de l'ensemble fusionné (41) des coordonnées des points (31).

10. Procédé pour déterminer la position spatiale d'éléments de réception (21) d'un conteneur (13), le procédé consistant à :
détecter un jeu respectif (33, 35) de coordonnées spatiales de points (31) au moyen d'un capteur (17) en mouvement pour plusieurs positions de capteur différentes les unes des autres,
les points (31) étant situés dans une zone spatiale comprenant le conteneur (13),
assembler les jeux respectifs (33, 35) de coordonnées spatiales en un ensemble fusionné (41) de coordonnées, et
déterminer, à l'aide de l'ensemble fusionné (41) des coordonnées des points (31), une position spatiale respective des éléments de réception (21) du conteneur (13).
